# EUROPÄISCHE PATENTANMELDUNG

(11) **EP 2 789 459 A1**
(43) Veröffentlichungstag der Anmeldung: **15.10.2014**
(21) Anmeldenummer: 13194015.7
(22) Anmeldetag: 22.11.2013
(51) Int. Cl.: B30B 15/06, B32B 38/06

(54) **Laminierplatte**

(30) Priorität: 09.04.2013 DE 102013103521; 05.09.2013 DE 102013109720
(71) Anmelder: PlascoTec GmbH, 42285 Wuppertal (DE)
(72) Erfinder: Engemann, Jürgen, 42119 Wuppertal (DE)
(74) Vertreter: Brötz, Helmut

(57) **Zusammenfassung**

Die Erfindung betrifft eine Laminierplatte (1), insbesondere für Laminierprozesse, insbesondere zur Herstellung von Dokumenten wie bspw. Führerscheinen, Personalausweisen, Kreditkarten oder dergleichen mittels Folien, wobei die Laminierplatte (1) einen Plattenkörper (2) umfasst, wobei die Oberfläche des Plattenkörpers (2) auf zumindest einer der beiden Plattenseiten (3) des Plattenkörpers (2) zumindest einen ersten Bereich (5) und zumindest einen zweiten Bereich (7) umfasst, wobei der erste Bereich (5) an seinem Außenrand (9), an den zweiten Bereich (7) angrenzt, wobei die gemittelte Rautiefe der Oberfläche des Plattenkörpers (2) in dem ersten Bereich (5) kleiner als die gemittelte Rauftiefe der Oberfläche des Plattenkörpers (2) in dem zweiten Bereich (7) ist, und wobei die Oberfläche des Plattenkörpers (2) in dem ersten Bereich (5) vollflächig mit Antihaftbeschichtung (6) bedeckt ist. Um Laminierplatten der eingangs genannten Art vorteilhaft weiterzubilden wird vorgeschlagen, dass die Oberfläche des Plattenkörpers (2) in dem zweiten (7) Bereich vollflächig mit Antihaftbeschichtung (6) bedeckt ist. Außerdem betrifft die Erfindung eine Anordnung zum Laminieren, umfassend zwei oder mehr miteinander gestapelte Laminierplatten (1).

## Beschreibung

Die vorliegende Erfindung betrifft eine Laminierplatte für Laminierprozesse, vorzugsweise zur Herstellung von Dokumenten wie bspw. Führerscheinen, Personalausweisen, Kreditkarten oder dergleichen mittels Folien, wobei die Laminierplatte einen Plattenkörper umfasst, wobei die Oberfläche des Plattenkörpers auf zumindest einer der beiden Plattenseiten des Plattenkörpers zumindest einen ersten Bereich und zumindest einen zweiten Bereich umfasst, wobei der erste Bereich an seinem Außenrand, vorzugsweise an seinem gesamten Außenrand oder an seinem Außenrand zumindest abschnittsweise, an den zweiten Bereich angrenzt, wobei die gemittelte Rautiefe der Oberfläche des Plattenkörpers in dem ersten Bereich kleiner als die gemittelte Rautiefe der Oberfläche des Plattenkörpers in dem zweiten Bereich ist, und wobei die Oberfläche des Plattenkörpers in dem ersten Bereich vollflächig mit Antihaftbeschichtung bedeckt ist.

Derartige Laminierplatten werden für die Herstellung von Dokumenten in Form von Stapeln ("Stacks") angeordnet, in denen zwischen je zwei zueinander benachbarten Laminierplatten jeweils mehrere Polycarbonat (PC)-Folien, Polyvinylchlorid (PVC)-Folien, Polyethylen (PE)-Folien oder Folien aus anderen Materialien eingelegt sind. Ein Stapel bzw. Stack kann aus mehreren sog. Sub-Stacks bestehen, wobei als Sub-Stack zwei zueinander parallel beabstandete Laminierplatten und eine Mehrzahl von dazwischen gestapelten Folien bzw. Laminierfolien bezeichnet wird. Folienzahlen zwischen zwei Laminierplatten liegen typisch bei sechs bis acht, können aber auch abweichen. Ein ganzer Stack kann sich bspw. aus sechs bis sieben oder aus einer abweichenden Zahl von Sub-Stapeln (Sub-Stacks) zusammensetzen. Bei der Verwendung einer solchen Anordnung in einem Laminierprozess wird der gesamte Stapel für eine definierte Zeit erhöhtem Druck und erhöhten Temperaturen ausgesetzt, um den jeweiligen Stapel aus in einem Sub-Stack eingelegten Folien miteinander dauerhaft zur Herstellung eines gewünschten Dokuments zu verbinden. Durch den Druck werden die Laminierplatten und dadurch die Folienstapel zusammengepresst. Bevorzugte Werte für Polycarbonatfolien (PC) sind eine Temperatur von etwa 190°C und ein Druck von etwa10 bis 15 N/cm² in der Anfangsphase des Laminationsprozesses, der sich vorzugsweise nach etwa 10 Minuten auf bevorzugt 150 bis 200 N/cm² erhöht. Bei anderen Folienmaterialien wie bspw. Polyvinylchlorid (PVC), Polyethylen (PE), etc. sind je nach Bedarf andere Laminier-Prozessparameter einzustellen. Die Folien können bei Bedarf ganzflächig mit einem Kontaktkleber versehen sein, um die mechanische Festigkeit des Folienverbundes zu erhöhen. Bei Polycarbonat kann vorzugsweise ein Kleber auf Polyurethan (PUR)-Basis und bei PVC-Folien vorzugsweise ein Polyamidbasierter Kleber eingesetzt werden. Auf einer oder auf beiden Plattenseiten können in die Laminierplattenoberfläche Strukturen, vorzugsweise im Mikrometerbereich, eingraviert oder gelasert sein, die unter der Einwirkung von Druck und Temperatur auf die an die Laminierplattenoberfläche in dem Sub-Stack angrenzende Folie und somit auf das hergestellte Dokument übertragen werden.

Nach einem erfolgten Laminierprozess und ggf. Strukturübertragung der Gravur auf die Folien werden die dadurch miteinander fest verbundenen Folien von den Laminierplatten getrennt. Bei diesem Trennvorgang können eventuell Farbresiduen von den Folien oder andere Verunreinigungen auf den Laminierplatten zurückbleiben und dort für die nachfolgenden Laminierprozesse zu Beeinträchtigungen der Produktqualität oder gar zu Produktausfall führen. Aus diesem Grund müssen die Laminierplatten nach einer bestimmten Zyklenzahl gereinigt werden. Diese Produktionsunterbrechungen, verbunden mit der Gefahr einer laufenden Beeinträchtigung der Produktqualität, haben im Stand der Technik zu der Entwicklung von Antihaftschichten auf den Laminierplatten geführt, welche diese negative Begleiterscheinung des Laminierprozesses weitgehend ausschalten sollen.

Dabei bestanden aber bisher noch Schwierigkeiten, speziell bei dem Gebrauch von Laminierplatten, bei denen die Oberflächen auf jeder Plattenseite zunächst überall einheitlich vorbehandelt, bspw. poliert, und anschließend überall bzw. vollflächig mit Antihaftbeschichtung bedeckt wurde. Während die Antihaftbeschichtung im Zentrum der Laminierplatten bzw. in dem Innenbereich der Laminierplattenoberfläche, der im Fall eines gewünschten Strukturübertrags die Gravuren beinhaltet und in dem es im Regelfall zu keinen starken Verunreinigungen kommt, zu dem gewünschten Effekt führt und es dort wegen fehlender Verunreinigungen oder Kleberesten zu keiner Ablösung von Antihaftbeschichtung kommt, kann es bisher bei solchen Laminierplatten an dem Randbereich der Laminierplattenoberfläche, der den Innenbereich in der Ebene der Laminierplattenoberfläche umgibt, noch zu Schwierigkeiten kommen. Dies hängt damit zusammen, dass das Format der Folien etwas kleiner als das Format der Laminierplatten gewählt wird. Während des Laminiervorganges können an den Kanten des Folienverbundes infolge der erhöhten Temperatur und des erhöhten Druckes Reste des thermoplastischen Klebers - sofern vorher appliziert - austreten und entlang der Folienkanten zu unerwünschten Ablagerungen und nachfolgend zu einem Festbacken auf den antihaftbeschichteten Laminierplatten führen. Nach einem Laminierprozess und ggf. Strukturübertragung auf die Folien werden die Folien von den Laminierplatten getrennt. Bei dem Trennvorgang wird zum Beispiel durch einen Kunststoffspatel mechanischer Druck auf die Folienkanten einschließlich der Klebreste entlang der Folienkanten ausgeübt. Wenn der Kleber fest mit der Antihaftschicht verbunden ist - wie zum Beispiel ein PUR-basierter Kleber auf Polycarbonatfolien - kann dies unter Umständen auch zu einem unerwünschten Ablösen der Antihaftschicht auf der Laminierplatte, ausgehend von der linienförmigen Ablagerung führen. Während eine Ablösung der Antihaftbeschichtung außerhalb des insbesondere gravierten Innenbereichs, der während des Laminierprozesses den sog. Nutzen bildet, ohne Beeinträchtigung der Produktqualität hinzunehmen wäre, beobachtet man, dass beim Ablösen des laminierten Folienstapels von der Laminierplatte, wenn sich in dem an den Innenbereich außen angrenzenden Randbereich an dem ausgetretenen Klebstoff anhaftende Antihaftbeschichtung zunächst lokal von dem Plattenkörper ablöst, diese lokal abgelöste Antihaftbeschichtung mit der den Nutzen bedeckenden Antihaftschicht verbunden bleibt, wodurch die Antihaftbeschichtung vom Außenrand des Innenbereichs ausgehend auch in den Nutzen hineinführend, quasi fingerartig, von dem Plattenkörper abgelöst wird, was unerwünscht ist. Zur Abhilfe wurde versucht, nur den Nutzen, d. h. die Gravuren und einen sie umgebenden inneren bzw. ersten Bereich der Plattenoberfläche, der von einem dazu äußeren bzw. zweiten Bereich der Plattenoberfläche rahmenartig umschlossen wird, mit Antihaftbeschichtung zu versehen, während aber dieser umgebende sog. zweite Bereich der Oberfläche des Plattenkörpers zur Erzielung einer gewünschten Antihaftwirkung nicht mit Antihaftbeschichtung bedeckt, sondern stattdessen lediglich aufgeraut wurde.

Vor diesem Hintergrund liegt der Erfindung die Aufgabe zugrunde, Laminierplatten der eingangs genannten Art vorteilhaft weiterzubilden, so dass insbesondere einzelne oder mehrere der zuvor beschriebenen Nachteile möglichst weitgehend vermieden werden können. Insbesondere wird eine weitere Verbesserung der Gebrauchseigenschaften angestrebt. Angestrebt wird insbesondere auch eine Reduzierung der zur Ablösung eines laminierten Folienstapels von einer Laminierplatte erforderlichen, vorzugsweise spatel-induzierten, Kraftwirkung. Angestrebt wird insbesondere auch eine leichtere Reinigbarkeit der Laminierplatte.

Die Aufgabe wird erfindungsgemäß zunächst und im Wesentlichen in Verbindung mit dem Merkmal gelöst, dass die Oberfläche des Plattenkörpers in dem zweiten Bereich der Oberfläche des Plattenkörpers vollflächig mit Antihaftbeschichtung bedeckt ist. Diese Maßnahme führte entgegen der zunächst noch bestehenden Erwartung, dass dadurch wieder die Gefahr eines fingerartigen Einwachsens von Ablösungen der Antihaftbeschichtung in den Nutzen hinein besteht, überraschend zu dem Ergebnis, dass diese Schwierigkeiten insbesondere bei geeigneter Rauigkeit des zweiten Bereichs der Oberfläche des Plattenkörpers vermieden werden können. Ein insofern zugrunde liegender Gedanke ist eine lokale Variation der Hydrophobie mittels einer gezielten Einstellung der Rauigkeit in Verbindung mit einer nachfolgenden Antihaftbeschichtung. Die Ausprägung dieses Effektes hängt unter anderem von der Art der Aufrauung, d. h. von der Rautiefe, evtl. von der Periodizität (etwa bei Aufrauung durch Gravieren, gezieltem Laserbeschuss oder lithografisch definiertem lokalchemischem Ätzen), bspw. von der Oberflächentopographie (bspw. scharfe Kanten/Spitzen, abgerundete Strukturen oder dergleichen) und der jeweiligen Antihaftbeschichtung ab. Unter einer vollflächigen Bedeckung mit Antihaftbeschichtung wird verstanden, dass der dazu angegebene Bereich der Oberfläche überall bzw. vollständig mit Antihaftbeschichtung bedeckt ist. Es wurde erkannt, dass sich diese Zusammenhänge zur lokalen Steuerung der Wirksamkeit der Antihaftbeschichtung und insofern an der Laminierplattenoberfläche zur Differenzierung zwischen einem Nutzen (Innenbereich) und einem den Nutzen in der Oberflächenebene umschließenden, im Vergleich dazu also äußeren Bereich nutzen lässt. Insbesondere kann eine dem aus der Literatur bekannten Lotusblatt-Effekt vergleichbare Antihaftwirkung erreicht werden. Zur Beurteilung des Antihaftvermögens kann dabei bspw. der sog. Wasserkontaktwinkel dienen. Je größer dessen Wert ist, desto ausgeprägter ist die Antihaftwirkung einer Oberfläche. Beispielsweise wurde in Versuchen gefunden, dass auf einer blanken (bspw. gedrehten), d. h. unbeschichteten, Oberfläche der Wasserkontaktwinkel 27° beträgt, während sich der Wasserkontaktwinkel nach einer Strahlbehandlung der Aluminiumoberfläche mit Glasperlen einer Körnung im Bereich von 100 µm bis 200 µm auf 34° vergrößern ließ. Auch wurde gefunden, dass, wenn die gestrahlte Aluminiumoberfläche anschließend mit einer Antihaftbeschichtung beschichtet wurde, der Wasserkontaktwinkel sogar auf 93° vergrößert werden konnte. In Vergleichsversuchen, in denen als Strahlmittel Korund der Körnung 355 µm bis 500 µm zum Sandstrahlen verwendet wurde, betrug der Wasserkontaktwinkel auf der bestrahlten blanken Aluminiumoberfläche zwar nur 27°, betrug aber nach dem Auftrag einer entsprechenden Antihaftbeschichtung dann sogar 118°. Im Vergleich zu der mit Glasperlen gestrahlten Oberfläche führte Korund zu einer deutlich zerklüfteteren Oberfläche mit spitzen Kanten und Graten. Es wurde erkannt, dass sich die Antihafteigenschaften durch eine geeignete Wahl von Oberflächentopographie und Antihaftbeschichtung in weiten Grenzen variieren lassen und dass sich dieser exemplarisch für eine Aluminiumoberfläche nachgewiesene kombinatorische Einfluss von Topographie und Antihaftbeschichtung auch auf Laminierplatten übertragen lässt zur lateralen Einstellung lokaler Antihafteigenschaften, die insbesondere eine leichtere Reinigung der Laminierplatten nach einer bestimmten Anzahl von Laminationszyklen ermöglicht. Es versteht sich, dass alle vorgenannten Zahlenwerte exemplarisch zu verstehen sind.

Die Erfindung nutzt diese Erkenntnis, um an der Laminierplatte die Antihaftwirkung in dem vergleichsweise äußeren, sog. zweiten Bereich der Oberfläche des Plattenkörpers im Vergleich zu der zu dem sog. Nutzen gehörenden ersten Bereich der Oberfläche des Plattenkörpers, insbesondere erheblich, anzuheben. Wenn sich bei einem Laminierprozess der Außenrand des Folienstapels im Bereich des mit Antihaftbeschichtung versehenen sog. zweiten Bereichs der Plattenoberfläche befindet, führt die Anhebung der Antihaftwirkung dazu, dass eine Ablagerung und/oder Haftung von Kleberresiduen auf den Laminierblechen im Randbereich deutlich reduziert wird und folglich ein zerstörungsfreies Ablösen des laminierten Folienverbundes von den Laminierplatten (das Ablösen erfolgt vorzugsweise durch Ansetzen eines Spaltes) an dem Folienrand möglich ist. Zur Herstellung besteht bspw. die Möglichkeit, dass ausgehend bspw. von einer zunächst insgesamt einheitlich vergleichsweise glatten Oberfläche der Laminierplatte nur der sog. zweite, also äußere Bereich, vorzugsweise mittels Strahlbehandlung, in gewünschter Weise aufgeraut wird und danach die gesamte Oberfläche des Plattenkörpers auf dieser Plattenseite mit Antihaftbeschichtung beschichtet wird. Auch besteht die Möglichkeit, dass der erste Bereich der Oberfläche des Plattenkörpers vor dem Auftrag der Antihaftbeschichtung poliert wird. Alternativ bestünde bspw. die Möglichkeit, dass vor dem Auftrag der Antihaftbeschichtung der erste Bereich der Oberfläche des Plattenkörpers auf eine erste Weise bearbeitet (insbesondere aufgeraut) und der sog. zweite Bereich auf eine sich davon unterscheidende, zweite Weise, die zu einer unterschiedlichen Rauigkeit führt, bearbeitet bzw. aufgeraut wird.

In exemplarischen Versuchen wurde der erste Bereich der Oberfläche des Plattenkörpers poliert und dann darauf DLC (Diamond-Like-Carbon)-basierende Antihaftschicht aufgetragen, was zu einer spiegelnden Oberfläche mit einem Wasserkontaktwinkel von typisch etwa 90° bis 95° führte. Der zweite Bereich der Oberfläche des Plattenkörpers wurde vorher mittels Strahlbehandlung aufgeraut und anschließend die gleiche Antihaftschicht aufgetragen, was zu einem Wasserkontaktwinkel von über 110° führte. Dies zeigt, dass die im Randbereich der Laminierplatte vergleichsweise größere Rauigkeit der Oberfläche des Plattenkörpers selbst bei einer für alle Bereiche einheitlich zusammengesetzten Antihaftbeschichtung eine vorzugsweise randnahe Variation der Antihafteigenschaften auf der Laminierplattenoberfläche ermöglicht, wodurch dort das Anhaften von unerwünschten Kontaminationen und/ oder Kleberrückständen reduziert wird. Infolge dessen lässt sich durch die Aufrauung im Randbereich erreichen, dass im Vergleich zu herkömmlichen Laminierplatten zur Ablösung des Folien-Stacks von der Laminierplatte eine geringere Krafteinwirkung erforderlich ist. Somit kann die unerwünschte Ablösung der Antihaftbeschichtung ausgehend vom Rand des Folienstapels unterdrückt bzw. reduziert oder insgesamt vermieden werden. Es wurde gefunden, dass sich durch eine geeignete Kombination von lokaler Aufrauung und nachfolgender partieller oder ganzflächiger Antihaftbeschichtung (ein- oder beidseitig der Laminierplatte) eine mechanisch induzierte Ablösung von Antihaftschichten im Randbereich der Laminierplatte unterdrücken oder gar vermeiden lässt.

Die Rauigkeit (anstelle dieses Begriffs wird zunehmend der Begriff Rauheit verwendet), insbesondere die gemittelte Rautiefe, der Oberfläche des Plattenkörpers in dem zweiten Bereich ist zweckmäßig so groß, dass an der Oberfläche einer hierauf aufgetragenen Antihaftbeschichtung und somit an der Oberfläche der Laminierplatte ebenfalls eine Struktur, insbesondere eine Rauigkeit, resultiert. Insofern ist bevorzugt, dass an der Oberfläche der Laminierplatte die Rauheit, insbesondere die gemittelte Rautiefe, oder der arithmetische Mittenrauwert oder beide dieser Kenngrößen, in einem dem zweiten Bereich der Oberfläche des Plattenkörpers entsprechenden Bereich größer als in einem dem ersten Bereich der Oberfläche des Plattenkörpers entsprechenden Bereich ist. Die Oberfläche der Laminierplatte wird von der Antihaftbeschichtung gebildet. Folglich bezieht sich die hier angesprochene Rauheit an der Oberfläche der Laminierplatte auf die äußere Rauigkeit des mit Antihaftbeschichtung beschichteten Plattenkörpers. Dies bedeutet, dass die hier angesprochene Rauigkeit an dem mit Antihaftbeschichtung beschichteten, nicht an dem noch unbeschichteten, Plattenkörper zu ermitteln ist. Vorzugsweise, d. h. nicht notwendig, besteht die Möglichkeit, die Antihaftbeschichtung mittels des sog. plasma enhanced chemical vapour deposition-Verfahren (PECVD-Verfahren) auf den Plattenkörper aufzubringen. Mit dem PECVD-Verfahren abgeschiedene Schichten folgen konform und konturgetreu der vorgegebenen Topographie auf der Oberfläche des Plattenkörpers. Dies ermöglicht in sehr guter Näherung quasi eine Parallelverschiebung der Topographie der Oberfläche des Plattenkörpers zu der Topographie der Oberfläche der beschichteten Laminierplatte. In Konsequenz findet sich die Rauigkeit der Oberfläche des Plattenkörpers bei der Antihaftbeschichtung (und somit auf der Oberfläche des beschichteten Plattenkörpers) mit sehr guter Näherung wieder. Wenn man das bevorzugte PECVD-Verfahren zugrunde legt, können daher in der Beschreibung und den Ansprüchen genannte Rauheitswerte für die Oberfläche des Plattenkörpers mit sehr guter Näherung auf die auf der Antihaftbeschichtung gemessene Rauigkeit übertragen werden (und umgekehrt).

Im übrigen haben Rauheits-Messungen gezeigt, dass bezüglich einer gegebenen Rauheitsmessstrecke die Ermittlung der gemittelten Rautiefe R_{z} und des arithmetischen Mittenrauwertes Rₐ nur zu geringfügig anderen Zahlenangaben führt. Die in der vorliegenden Anmeldung zu der gemittelten Rautiefe genannten Zahlenwerte können somit näherungsweise auf den arithmetischen Mittenrauwert (und umgekehrt) übertragen werden.

Vorzugsweise kann die zuvor genannte Abstufung der Rauigkeit bezüglich beliebiger, innerhalb der angesprochenen Bereiche liegender Bezugsstrecken der Rauigkeitsmessung (Rauheitsbezugsstrecken) gelten.

Während des Laminiervorganges werden zwischen Laminierplatten eingebrachte Folienstacks unter Druck auf eine Temperatur gebracht, bei der eine plastische Verformung der einzelnen Folien einsetzt. Bei offener seitlicher Begrenzung der einzelnen Folien kann damit unter Umständen ein Kriechen ("Creeping") der Folien verbunden sein, das sich umso stärker auswirkt, je größer die Antihaftwirkung der Laminierplattenoberfläche ist. Gerade diese an sich gewünschte Antihaftwirkung ist aber die Aufgabe der Antihaftbeschichtung. Wenn Bedingungen vorliegen, unter denen ein Kriechen der Folie beim Laminieren erfolgt, können ohne Gegenmaßnahme in die Laminierplatten eingebrachte Mikrostrukturen unter dem Einfluss des Kriechens in ihren Konturen verschmieren und damit unbrauchbar werden. Ähnliches gilt für eventuell lokal begrenzte Verunreinigungen oder mechanische Defekte auf der mit Antihaftbeschichtung beschichteten Laminierplattenoberfläche. Durch das Kriechen können linien- streifen- oder flächenförmige Defekte entstehen, die sich optisch sichtbar - und damit inakzeptabel - auf den Folien wiederfinden.

Um das beschriebene Kriechen zumindest zu verringern oder möglichst vollständig zu vermeiden, ist bevorzugt, dass an der Oberfläche der Laminierplatte die gemittelte Rautiefe und/oder der arithmetische Mittenrauwert in dem dem zweiten Bereich der Oberfläche des Plattenkörpers entsprechenden beziehungsweise zugeordneten Bereich etwa 1 Mikrometer beträgt oder größer als 1 Mikrometer ist und/oder kleiner als 10 Mikrometer ist, vorzugsweise im Wertebereich von 2 bis 5 Mikrometern liegt, weiter vorzugsweise im Wertebereich von 2,5 bis 3,5 Mikrometern liegt und weiter vorzugsweise 3 oder etwa 3 Mikrometer beträgt. Es besteht bspw. die Möglichkeit, dass dies nur auf die gemittelte Rautiefe zutrifft oder dass dies nur auf den arithmetischen Mittenrauwert zutrifft oder dass dies auf beide dieser Kenngrößen zutrifft. Auch in diesem Zusammenhang bezieht sich die angesprochene gemittelte Rautiefe bzw. der arithmetische Mittenrauwert an der Oberfläche der Laminierplatte primär auf die äußere Rauigkeit des mit Antihaftbeschichtung beschichteten Plattenkörpers. Dies bedeutet, dass die hier angesprochene Rauigkeit an dem mit Antihaftbeschichtung beschichteten, nicht an dem noch unbeschichteten, Plattenkörper zu ermitteln ist. Der zuvor genannte Wertebereich ist nicht abschließend, d. h. auch abweichende Werte, insbesondere höhere Werte, wären möglich. Allerdings haben Versuche überraschend gezeigt, dass sich bereits bei den genannten Rauigkeitswerten während des Laminierens im zweiten Bereich bzw. im Randbereich ein Mikroformschluss zwischen der Laminierplatte und der angrenzenden Folie erreichen lässt, der ein unerwünschtes laterales Verschieben, das ansonsten insbesondere als Folge einer durch Querkontraktion verursachten Dehnung auftreten kann, verhindern kann. Die Entstehung des Mikroformschlusses zwischen den Folien und Laminierplatten wird beim Laminieren durch das Anlegen eines Anpressdruckes und die Temperaturerhöhung unterstützt. Der Mikroformschluss verleiht der Laminierplattenoberfläche eine zusätzliche Wirkeigenschaft. Der Mikroformschluss und die für ihn maßgebliche Rauigkeit sind auf der Laminierplattenoberfläche nur außerhalb des sog. Nutzens, also in dem zweiten Bereich, vorhanden. Obwohl somit ursächlich die unerwünschte Lateralbewegung nur im zweiten Bereich unterdrückt wird, hat sich überraschend herausgestellt, dass die den Rand der Laminierplatten umlaufende Aufrauung sehr effektiv das Creeping der Folie insgesamt reduziert. Weitere Aufrauungen auf der Plattenoberfläche, bspw. an einem oder mehreren Mittelstegen, die sich zwischen voneinander beabstandeten sog. ersten Bereichen bzw. Nutzen erstrecken, können diesen Effekt noch unterstützen. Alternativ oder kombinativ können zur Unterstützung noch nachfolgend beschriebene sog. dritte Bereiche als "Inseln" innerhalb jeweiliger sog. erster Bereiche vorhanden sein, die an der Oberfläche der Laminierplatte entsprechende oder ähnliche Rauigkeit aufweisen. Geeignete Rautiefen liegen bereits bei einem Wert der gemittelten Rautiefe und/oder des arithmetischen Mittenrauwertes von etwa 1 Mikrometer vor. Durch Erhöhung auf Werte, die größer als 1 Mikrometer sind, lässt sich das Creeping noch weiter reduzieren. Vorteilhaft bleibt trotz des erzielbaren Mikroformschlusses, der lateral bzw. in Richtungen parallel zu der Plattenoberfläche wirksam ist, die Antihaftbeschichtung erhalten, so dass ein leichtes vertikales Ablösen der Folie von den Laminierplatten möglich ist. Die Aufrauung im sog. zweiten bzw. äußeren Bereich kann somit eine Doppelfunktion erfüllen. Einerseits kann die Aufrauung die Antihaftwirkung der Antihaftbeschichtung steigern, andererseits wirkt sie mittels des zuvor beschriebenen Mikroformschlusses dem unerwünschten Kriechen entgegen.

Der sog. erste Bereich der Oberfläche des Plattenkörpers kann vorzugsweise eine rechteckige oder bspw. quadratische Außenkontur aufweisen, jedoch auch jede andere an ein vorgegebenes Folienformat angepasste Formgebung besitzen. Die Antihaftbeschichtung liegt frei, d. h. sie bildet die Laminierplattenoberfläche und somit während eines Laminiervorganges die Kontakt- bzw. Andruckfläche für einen Folienstapel. Der Plattenkörper kann bspw. eine aus einem Material oder aus mehreren Materialien hergestellte Platte, Blech oder dergleichen sein, wobei als Material bspw. Metall, Kunststoff usw. in Betracht kommt. Bei einem Plattenkörper kann es sich aber auch um eine zunächst aus einem oder mehreren Materialien hergestellte und anschließend an der Oberfläche (bspw. mit einer Grundierung) beschichtete Platte, Blech oder dergleichen handeln. Unter einer Antihaftbeschichtung kommt eine Beschichtung in Betracht, deren Wasserkontaktwinkel größer als der Wasserkontaktwinkel einer vergleichsweise nicht mit der Antihaftbeschichtung beschichteten, ansonsten gleichen Oberfläche des Plattenkörpers ist.

Bevorzugt ist vorgesehen, dass der sog. erste Bereich und der sog. zweite Bereich der Oberfläche des Plattenkörpers mit jeweils gleicher Antihaftbeschichtung beschichtet ist und dass sich die Antihaftbeschichtung zwischen den verschiedenen Bereichen der Oberfläche durchgehend bzw. ununterbrochen erstreckt. Die verschiedenen Bereiche der Oberfläche des Plattenkörpers liegen dabei bevorzugt auf gleichem Niveau, d. h. erstrecken sich in einer gemeinsamen Oberflächenebene. Unter der sog. gemittelten Rautiefe wird insbesondere die in der Literatur üblich mit der Abkürzung R_{z} bezeichnete gemittelte Rautiefe verstanden, die als arithmetisches Mittel aus Einzelrautiefen 5 aneinander grenzender Einzelmessstrecken, in die eine Rauheitsbezugsstrecke unterteilt ist, ermittelt wird. Jede Einzelrautiefe entspricht der Differenz aus der maximalen und der minimalen Höhe des Profils innerhalb der jeweils zugeordneten Einzelmessstrecke. Wenn vorzugsweise die gemittelte Rautiefe in dem ersten Bereich der Oberfläche des Plattenkörpers entlang einer beliebigen Rauheitsbezugsstrecke kleiner ist als in dem zweiten Bereich der Oberfläche des Plattenkörpers entlang einer beliebigen Rauheitsbezugsstrecke, ist die gemittelte Rautiefe in dem gesamten ersten Bereich kleiner als in dem gesamten zweiten Bereich.

Beispielsweise kann die gemittelte Rautiefe der Oberfläche des Plattenkörpers in dem ersten Bereich in einem Wertebereich von einigen Nanometern bis etwa 1 µm liegen. Andererseits kann die gemittelte Rautiefe der Oberfläche des Plattenkörpers in dem zweiten Bereich bspw. in einem Wertebereich von 100 bis 300 µm liegen. Die Schichtdicke der Antihaftbeschichtung kann bspw. in einem Wertebereich von 1 bis 3 µm liegen, andere Zahlenwerte sind aber jeweils auch möglich. Sie kann vorzugsweise in dem ersten und in dem zweiten Bereich (insbesondere auch in etwaigen weiteren Bereichen) gleich groß sein. Die unterschiedliche Topographie der Oberflächenbereiche nimmt Einfluss auf die sich dadurch ebenfalls unterscheidende Oberfläche der jeweils aufgetragenen Antihaftbeschichtung.

Darüber hinaus bestehen zahlreiche weitere Möglichkeiten zur bevorzugten Ausgestaltung der erfindungsgemäßen Laminierplatte.

Wie schon angesprochen, ist bevorzugt, dass der Wasserkontaktwinkel auf der Antihaftbeschichtung, die den sog. zweiten Bereich der Oberfläche des Plattenkörpers bedeckt, größer ist als der Wasserkontaktwinkel auf der Antihaftbeschichtung, die den ersten Bereich der Oberfläche des Plattenkörpers bedeckt. Es besteht die Möglichkeit, dass der erste Bereich der Oberfläche des Plattenkörpers den gesamten von seinem Außenrand berandeten, vorzugsweise umschlossenen, Bereich umfasst. Alternativ besteht die Möglichkeit, dass der erste Bereich der Oberfläche des Plattenkörpers den von seinem Außenrand berandeten, vorzugsweise umschlossenen, Bereich unter Ausschluss von einem oder mehreren Oberflächenbereichen, (insbesondere von sog. dritten Bereichen) umfasst, die an ihrem jeweiligen Außenrand von dem ersten Bereich der Oberfläche des Plattenkörpers umschlossen sind. Bei diesen Oberflächenbereichen handelt es sich um Inseln in dem eigentlichen Nutzenbereich. Diese können aufgeraut und beschichtet oder aufgeraut und unbeschichtet sein. Vorzugsweise kann sich der zweite Bereich an allen Seiten nach außen bis an den Außenrand der Laminierplatte erstrecken.

Es besteht die Möglichkeit, dass nicht nur ein, sondern mehrere sog. erste Bereiche der Oberfläche des Plattenkörpers vorgesehen sind, die entlang ihres jeweiligen Außenrandes vorzugsweise vollständig von dem sog. zweiten Bereich umrandet werden. Beispielsweise könnten zwei, drei oder mehr sog. erste Bereiche vorhanden sein. Die Begriffe erster Bereich, zweiter Bereich, dritter Bereich usw. bezwecken folglich nicht die bloße durchlaufende Nummerierung von Bereichen, sondern dienen zur Unterscheidung von aneinander angrenzenden Bereichen der Oberfläche, die zueinander bezüglich der gemittelten Rautiefe verschiedene Beschaffenheit haben und dienen insofern bei entsprechender Mehrzahl von Bereichen zur Gruppierung von jeweils solchen Bereichen der Oberfläche, die dieses Kriterium erfüllen und die insbesondere zueinander bezüglich der gemittelten Rautiefe gleiche oder gleichartige Beschaffenheit haben oder haben können. So unterscheidet sich der erste Bereich oder jeder erste Bereich der Oberfläche von dem daran angrenzenden zweiten Bereich der Oberfläche bezüglich der gemittelten Rauigkeit. Gibt es mehrere sog. erste Bereiche der Oberfläche, erfüllen diese jeweils dieses Kriterium und haben insbesondere bezüglich der gemittelten Rauigkeit gleiche oder gleichartige Beschaffenheit. Ebenso unterscheidet sich der dritte Bereich oder jeder dritte Bereich der Oberfläche von dem daran angrenzenden ersten Bereich der Oberfläche bezüglich der gemittelten Rauigkeit. Gibt es mehrere sog. dritte Bereiche der Oberfläche, erfüllen diese jeweils dieses Kriterium und haben insbesondere bezüglich der gemittelten Rauigkeit gleiche oder gleichartige Beschaffenheit. Bei insofern gleichartiger Beschaffenheit innerhalb einer Gruppe könnte man anstelle von ersten Bereichen der Oberfläche daher, auch in den Patentansprüchen, von Bereichen der Oberfläche mit einer ersten Oberflächenbeschaffenheit, anstelle von zweiten Bereichen der Oberfläche auch von Bereichen der Oberfläche mit einer zweiten Oberflächenbeschaffenheit und anstelle von dritten Bereichen der Oberfläche auch von Bereichen der Oberfläche mit einer dritten Oberflächenbeschaffenheit sprechen. Da die zweiten Bereiche und die dritten Bereiche nicht aneinandergrenzen, können ihre gemittelten Rauigkeiten und insofern ihre Oberflächenbeschaffenheiten zwischen den Gruppen gleich oder unterschiedlich sein. Sind in Bezug auf eine jeweilige Plattenseite mehrere sog. erste Bereiche vorhanden, werden diese an ihrem jeweiligen Außenrand von einem sog. zweiten Bereich umrandet und insofern innerhalb der Oberflächenebene voneinander beabstandet. Wie noch nachfolgend beschrieben wird, besteht die Möglichkeit, dass innerhalb eines jeweiligen Außenrandes eines ersten Bereiches jeweils ein oder mehrere sog. dritte Bereiche ausgebildet sind. Die innerhalb eines Außenrandes eines ersten Bereiches angeordneten dritten Bereiche werden an ihrem jeweiligen Außenrand von dem zugeordneten ersten Bereich umschlossen, d. h. in der Oberflächenebene voneinander beabstandet. Angesichts dieser Betrachtung könnte man bspw. anstelle eines ersten Bereiches auch von einem inneren Bereich, anstelle eines dritten Bereiches auch von einem innersten Bereich und anstelle eines zweiten Bereiches auch von einem äußeren Bereich oder Rahmenbereich sprechen.

Betreffend die Antihaftbeschichtung ist bevorzugt, dass diese Kohlenstoff, insbesondere mit Elementzusätzen wie beispielsweise Silizium und/oder Sauerstoff, aufweist. Es besteht die Möglichkeit, dass es sich um eine Antihaftbeschichtung auf Kohlenstoffbasis, wie beispielsweise um eine DLC-Schicht, handelt. Auch besteht die Möglichkeit, dass die Antihaftbeschichtung Teflon und/oder Nano-Partikel aufweist. Bei der Antihaftbeschichtung kann es sich alternativ um eine CrN-Schicht oder um eine andere Hydrophob-Schicht handeln.

Bevorzugt ist, dass in den von dem Außenrand des ersten Bereichs umschlossenen Bereich der Plattenoberfläche eine oder mehrere Gravuren in die Oberfläche des Plattenkörpers eingebracht ist bzw. sind, wobei jede Gravur an ihrem Außenrand von dem ersten Bereich der Oberfläche umschlossen ist. Insofern ist ein jeweiliger von einer Gravur eingenommener Bereich der Oberfläche des Plattenkörpers kein Bestandteil des sog. ersten Bereichs der Oberfläche. Bei der Gravur kann es sich bspw. um eine Lasergravur, Stichelgravur oder dergleichen handeln. Bevorzugt ist jede Gravur vollflächig mit Antihaftbeschichtung bedeckt. Vorzugsweise erstreckt sich die Antihaftbeschichtung unterbrechungslos über den ersten Bereich und jede der Gravuren hinweg, d. h. insofern durchgehend.

Es besteht auch die Möglichkeit, dass die Oberfläche des Plattenkörpers in ihrem gesamten sog. ersten Bereich poliert ist und anschließend mit Antihaftbeschichtung bedeckt wurde. Alternativ oder kombinativ besteht bspw. die Möglichkeit, dass der erste Bereich der Oberfläche des Plattenkörpers vor dem Auftrag der Antihaftbeschichtung je nach Bedarf bspw. geätzt, gebürstet, gestrahlt oder auf andere zweckmäßige Weise behandelt wurde. Betreffend den zweiten Bereich der Oberfläche des Plattenkörpers ist bevorzugt, dass dieser mittels Strahlbehandlung, vorzugsweise unter Verwendung von Sand, Korund, Glas oder dergleichen als Strahlmittel, aufgeraut und danach mit Antihaftbeschichtung bedeckt wurde. Vorzugsweise wurde nach einer Strahlbehandlung unter Verwendung eines vergleichsweise gröberen Strahlmittels eine Strahlbehandlung unter Verwendung eines im Vergleich dazu feineren Strahlmittels vorgenommen. Vorzugsweise erfolgt das Strahlen der Oberfläche des Plattenkörpers in deren zweitem Bereich mit Korund, dessen Körnung größenmäßig in einem Wertebereich von 335 µm bis 500 µm liegt. Alternativ oder bspw. anschließend besteht die Möglichkeit, den zweiten Bereich der Oberfläche des Plattenkörpers bspw. mittels Glasperlen einer Strahlbehandlung zu unterziehen, wobei die Glasperlen größenmäßig in einem Wertebereich von 100 µm bis 200 µm gewählt sein können.

Wie schon angesprochen, besteht auch die Möglichkeit, dass es auf der zumindest einen Plattenseite zumindest einen sog. dritten Bereich oder mehrere sog. dritte Bereiche der Oberfläche des Plattenkörpers gibt, wobei ein jeweiliger dritter Bereich an seinem Außenrand von einem ersten Bereich der Oberfläche des Plattenkörpers umschlossen ist. Bevorzugt ist, dass sich die gemittelte Rautiefe der Oberfläche des Plattenkörpers in einem jeweiligen dritten Bereich von der gemittelten Rautiefe der Oberfläche des Plattenkörpers in dem angrenzenden ersten Bereich unterscheidet. In Fortführung dieses Gedankens besteht die Möglichkeit, dass es auf der besagten Plattenseite einen vierten Bereich oder mehrere vierte Bereiche der Oberfläche des Plattenkörpers gibt, wobei ein jeweiliger vierter Bereich an seinem Außenrand von dem ersten Bereich der Oberfläche des Plattenkörpers umschlossen ist, und dass sich die gemittelte Rautiefe der Oberfläche des Plattenkörpers in einem jeweiligen vierten Bereich von der gemittelten Rautiefe der Oberfläche des Plattenkörpers im ersten Bereich unterscheidet. Entsprechend könnten auch noch fünfte, sechste usw. Bereich mit jeweils weiteren, sich unterscheidenden gemittelten Rautiefen vorhanden sein.

Bevorzugt ist, dass die gemittelte Rautiefe in dem zweiten Bereich der Oberfläche des Plattenkörpers größer als oder gleich groß wie die gemittelte Rautiefe in einem dritten Bereich oder wie in mehreren dritten Bereichen der Oberfläche des Plattenkörpers ist. Wenn die gemittelte Rautiefe entlang einer beliebigen Rauheitsbezugsstrecke in dem zweiten Bereich der Oberfläche des Plattenkörpers größer ist als die gemittelte Rautiefe entlang einer beliebigen Rauheitsbezugstrecke in einem jeweiligen dritten Bereich, besitzt die Oberfläche im zweiten Bereich überall eine größere gemittelte Rautiefe als an jeder beliebigen Stelle eines dritten Bereiches. Vorzugsweise kann an der Oberfläche der Laminierplatte die Rauheit, insbesondere die gemittelte Rautiefe und/oder arithmetische Mittenrauwert, in einem dem zweiten Bereich der Oberfläche des Plattenkörpers entsprechenden Bereich größer als oder gleich groß sein wie in einem einem dritten Bereich der Oberfläche des Plattenkörpers entsprechenden Bereich oder wie in mehreren Bereichen, die mehreren dritten Bereichen der Oberfläche des Plattenkörpers entsprechen. Auch ist bevorzugt, dass in einem jeweiligen dritten Bereich der Plattenoberfläche die gemittelte Rautiefe entlang einer beliebigen Rauheitsbezugsstrecke größer ist als die gemittelte Rautiefe entlang einer beliebigen Rauheitsbezugsstrecke in dem ersten Bereich der Oberfläche des Plattenkörpers. Insofern ist bevorzugt, dass an der Oberfläche der Laminierplatte die Rauigkeit, insbesondere die gemittelte Rautiefe und/oder der arithmetische Mittenrauwert, in Bereichen, die einem jeweiligen dritten Bereich der Plattenoberfläche entsprechen, größer ist als in einem dem ersten Bereich der Oberfläche des Plattenkörpers entsprechenden Bereich der Oberfläche der Laminierplatte. Unter sog. sich entsprechenden Bereichen werden lage- und formmäßig, also bezüglich der Ränder, übereinstimmende Bereiche der Oberfläche des Plattenkörpers (einerseits) und der Oberfläche der Laminierplatte (andererseits) verstanden. Insofern ist bevorzugt, dass der Wasserkontaktwinkel auf der Antihaftbeschichtung, die einen jeweiligen dritten Bereich der Oberfläche des Plattenkörpers bedeckt, größer ist als der Wasserkontaktwinkel auf der Antihaftbeschichtung, die den ersten Bereich der Oberfläche des Plattenkörpers bedeckt. Es besteht auch die Möglichkeit, dass die Oberfläche des Plattenkörpers in dem dritten Bereich oder in mehreren oder allen dritten Bereichen jeweils nicht mit Antihaftbeschichtung bedeckt ist oder jeweils vollflächig mit Antihaftbeschichtung bedeckt ist. Vorzugsweise erstreckt sich die Antihaftbeschichtung unterbrechungslos von dem ersten Bereich in jeden der dritten Bereiche hinein. Gemäß der vorangehenden Erläuterung besteht die Möglichkeit, dass der erste Bereich der Plattenoberfläche entweder den gesamten von seinem Außenrand umschlossenen Bereich umfassen kann oder den von seinem Außenrand umschlossenen Bereich unter Ausschluss nur von einem oder mehreren dritten Bereichen und/oder von einem oder mehreren, von je einer Gravur ausgefüllten Bereichen.

Hinsichtlich des Plattenkörpers ist bevorzugt, dass dieser einen, vorzugsweise metallischen, Grundkörper umfasst. Alternativ kann es sich bspw. um einen Plattenkörper aus Kunststoff, Keramik oder dergleichen handeln. Es besteht die Möglichkeit, dass der Plattenkörper eine auf den Grundkörper zumindest auf einer oder auf beiden Plattenseiten aufgebrachte Grundierung z. B. in Form eines Haftvermittlers umfasst. Beispielsweise kann der Grundkörper aus Stahl bestehen und vernickelt sein. Alternativ kann der Grundkörper aus Edelstahl bestehen. Auch besteht die Möglichkeit, dass der Grundkörper aus Messing besteht und vorzugsweise vernickelt (insbesondere Glanznickel mit nachfolgender Verchromung) ist oder dass der Grundkörper aus Aluminium besteht.

Vorzugsweise ist vorgesehen, dass auch auf der anderen Plattenseite des Plattenkörpers eine zu der einen bisher beschriebenen Plattenseite korrespondierende Aufteilung in verschiedene Bereiche der Oberfläche gegeben ist. In diesem Fall umfasst auch auf der zweiten Plattenseite des Plattenkörpers die Oberfläche des Plattenkörpers zumindest einen ersten Bereich, der an seinem Außenrand, vorzugsweise überall oder zumindest abschnittsweise, an einen zweiten Bereich der Oberfläche des Plattenkörpers angrenzt, wobei der erste Bereich den gesamten von seinem Außenrand berandeten, insbesondere umschlossenen, Bereich oder den von seinem Außenrand berandeten, insbesondere umschlossenen, Bereich unter Ausschluss von einem oder mehreren Oberflächenbereichen, die an ihrem jeweiligen Außenrand von dem ersten Bereich umschlossen sind, umfasst, wobei die gemittelte Rautiefe der Oberfläche des Plattenkörpers in dem ersten Bereich kleiner ist als die gemittelte Rautiefe der Oberfläche des Plattenkörpers in dem zweiten Bereich ist, und wobei die Oberflächen des Plattenkörpers in dem ersten und in dem zweiten Bereich jeweils vollflächig mit Antihaftbeschichtung bedeckt sind. Darüber hinaus können auf der zweiten Plattenseite zusätzlich auch noch einzelne oder mehrere der zuvor mit Bezug auf die erste Plattenseite beschriebenen Merkmale verwirklicht sein.

Es besteht auch die Möglichkeit, dass in den Plattenkörper ein Einsatzelement, wie bspw. ein Chip, RFID, ein formgebendes Element, dessen Tiefenabdruck während des Laminationsprozesses in den Folienstapel eingeprägt wird, oder dergleichen, oder mehrere Einsatzelemente eingesetzt, vorzugsweise eingeklebt, ist bzw. sind. Als zweckmäßig wird angesehen, dass dabei eine Oberfläche eines jeweiligen Einsatzelementes an ihrem jeweiligen Außenrand von einem ersten Bereich der Oberfläche des Plattenkörpers umschlossen ist. In Verbindung damit ist auch bevorzugt, dass die gemittelte Rautiefe dieser jeweiligen Oberfläche des Einsatzelementes größer ist als die gemittelte Rautiefe des angrenzenden ersten Bereiches der Oberfläche des Plattenkörpers. Es besteht die Möglichkeit, d. h. dies ist nicht notwendig, dass die besagte Oberfläche des Chips, RFID oder dergleichen mit Antihaftbeschichtung beschichtet ist, wobei dort der Wasserkontaktwinkel größer ist als auf der gleichartigen Antihaftbeschichtung, die den ersten Bereich der Oberfläche des Plattenkörpers bedeckt.

In geometrischer Hinsicht ist bevorzugt, dass der vergleichsweise äußere sog. zweite Bereich an den Außenrand des sog. ersten Bereichs, insbesondere entlang des gesamten Verlaufs des Außenrandes, angrenzt, zumindest abschnittsweise oder insgesamt streifenförmig berandet ist und insbesondere rahmenartig den ersten Bereich umschließt. Dabei kann eine Breite des Randstreifens von vorzugsweise 10 mm bis 20 mm (oder auch abweichend) gewählt sein. Für den Laminierprozess wird zweckmäßig ein Folienformat gewählt, so dass der Rand des Folienstapels in Überlappung zu dem besagten zweiten Bereich liegt. Vorzugsweise kann der Rand des Folienstapels in Längsrichtung des zweiten Bereichs etwa in der Mitte, also bei halber Randbreite, verlaufen. Bevorzugt ist auch, dass sich der zweite Bereich zumindest abschnittsweise, vorzugsweise aber entlang seiner gesamten Umfangserstreckung, bis an den Außenrand der Laminierplatte erstreckt.

Es hat sich gezeigt, dass auch bspw. dann, wenn auf einer betrachteten Plattenseite die gesamte Oberfläche des Plattenkörpers mit der gleichen bzw. einheitlich zusammengesetzten Antihaftbeschichtung beschichtet ist, die Oberfläche dieser Antihaftbeschichtung auf dem vergleichsweise raueren, sog. zweiten Bereich der Oberfläche eine vergleichsweise noch stärkere Antihaftwirkung (also geringere Haftungsneigung) entwickelt als die Antihaftbeschichtung auf dem vergleichsweise weniger rauen sog. ersten Bereich der Oberfläche des Plattenkörpers.

Die Erfindung betrifft auch eine Anordnung zum Laminieren, umfassend zwei oder mehr miteinander gestapelte Laminierplatten, wobei zwischen je zwei Laminierplatten jeweils ein Folienstapel angeordnet ist, der eine Mehrzahl von, oft mit Klebstoff beschichteten, Folien umfasst. Es sind allerdings auch Anwendungsfälle ohne Klebstoff möglich.

Ausgehend von dem eingangs erläuterten Stand der Technik wird zur Lösung der genannten Aufgabe vorgeschlagen, dass es sich bei den Laminierplatten um erfindungsgemäße Laminierplatten handelt, die einzelne oder mehrere der vorangehend beschriebenen Merkmale verwirklichen, und dass bei einer zu der Laminierplattenoberfläche senkrechten projektionsmäßigen Betrachtung der Außenrand des Folienstapels an den Laminierplatten in projektionsmäßiger Überdeckung des jeweiligen zweiten Bereiches der Oberfläche des Plattenoberkörpers verläuft. Insofern betrifft die Erfindung auch eine Verwendung der erfindungsgemäßen Laminierplatten in einer solchen Anordnung zum Laminieren. Wie schon angesprochen, wird eine derartige Anordnung auch als Laminierstack oder Laminierstapel bezeichnet. Vorzugsweise verläuft der Außenrand des Folienstapels mittig über dem sog. zweiten Bereich der Oberfläche des Plattenkörpers. Dazu können entweder die Laminierplatten schon bei ihrer Herstellung auf ein gewünschtes Folienformat abgestimmt, also etwas größer gewählt werden, oder können Folien mit auf die Abmessungen von Laminierplatten abgestimmtem, also etwas kleinerem Folienformat gewählt werden. Zu insofern möglichen Wirkungen und Weiterbildungen wird auf die vorangehende Beschreibung Bezug genommen.

Die Erfindung wird nachfolgend mit Bezug auf die beigefügten Figuren, welche bevorzugte Ausführungsbeispiele zeigen, weiter beschrieben. Darin zeigt:
- Fig. 1: perspektivisch eine erfindungsgemäße Laminierplatte gemäß einem ersten Ausführungsbeispiel;
- Fig. 1a: die in Figur 1 gezeigte Laminierplatte, jedoch ohne Antihaftbeschichtung auf der Oberfläche des Plattenkörpers;
- Fig. 2: eine Draufsicht auf die in Fig. 1 gezeigte Laminierplatte in dortiger Blickrichtung II;
- Fig. 2a: eine Ausschnittsvergrößerung von Detail IIa aus Fig. 2;
- Fig. 3: eine Schnittansicht entlang Schnittebene III - III in Fig. 2;
- Fig. 3a: eine Ausschnittsvergrößerung von Detail IIIa aus Fig. 3;
- Fig. 4: eine Draufsicht auf die in Fig. 1 gezeigte Laminierplatte mit einem darauf ausgerichteten Folienstapel;
- Fig. 5: eine Abwandlung der in Fig. 4 gezeigten Ausführung mit zwei Folienstapeln;
- Fig. 6: schematisch einen Längsschnitt durch eine gestapelte Anordnung zum Laminieren, welche mehrere Laminierplatten gemäß den Figuren 1 bis 4 umfasst;
- Fig. 7: eine Ausschnittsvergrößerung von Detail VII aus Fig. 6, ebenfalls in Explosionsansicht;
- Fig. 7a: den in Fig. 7 gezeigten Ausschnitt der Anordnung, jedoch nach dem Laminieren;
- Fig. 8: in einer Draufsicht eine erfindungsgemäße Laminierplatte gemäß einem anderen bevorzugten Ausführungsbeispiel und
- Fig. 8a: ebenfalls in der Draufsicht die Laminierplatte gemäß Fig. 8, jedoch ohne Antihaftbeschichtung auf der Oberfläche des Plattenkörpers.

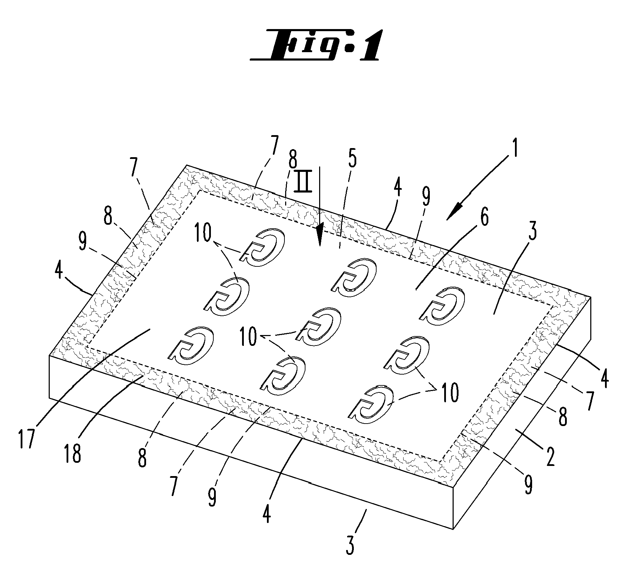

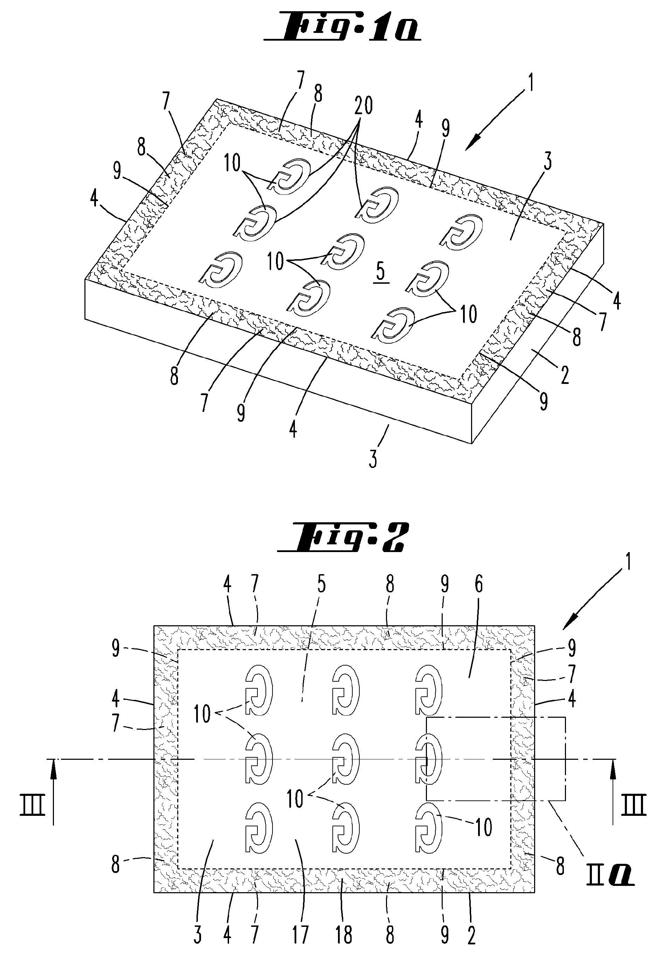

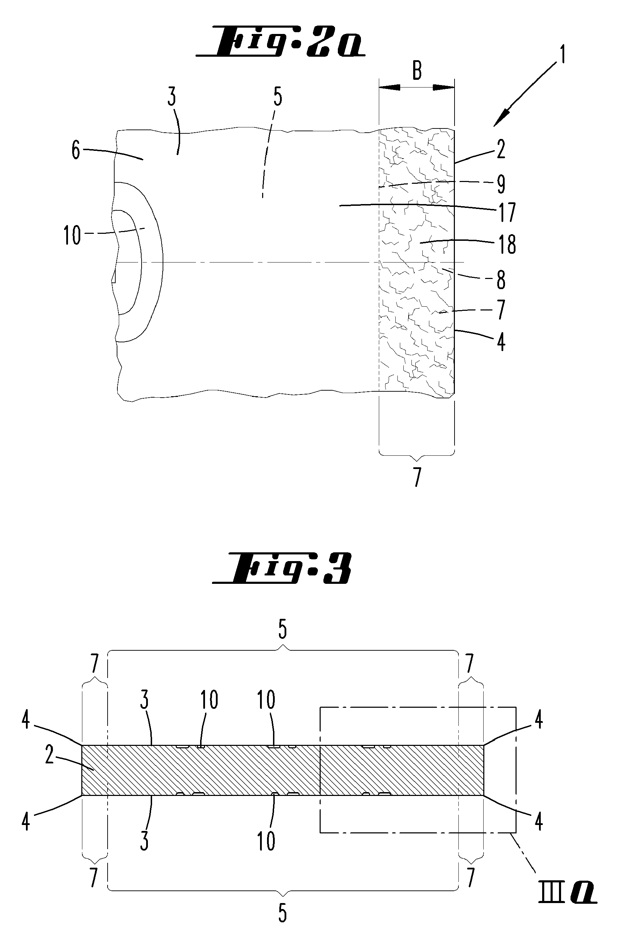

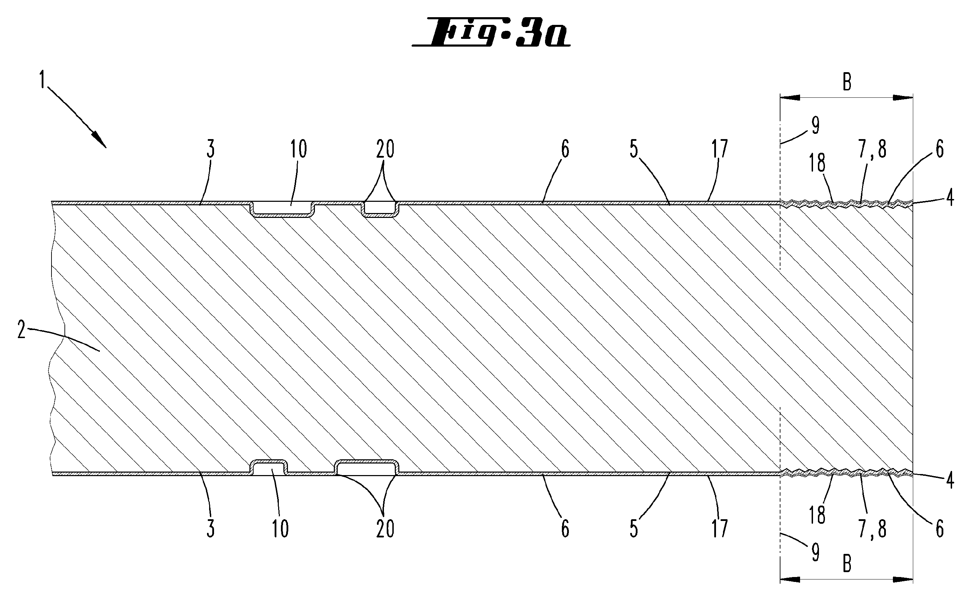

Mit Bezug auf die Figuren 1 bis 4 wird zunächst eine erfindungsgemäße Laminierplatte 1 gemäß einem ersten bevorzugten Ausführungsbeispiel vorgestellt. Wie auch bei den nachfolgenden Figuren ist die Darstellung schematisch und folglich weder maßstabs- noch größengerecht. Die Laminierplatte 1 umfasst einen in dem Beispiel aus Metall hergestellten Plattenkörper 2, der die Gestalt eines rechteckig berandeten Bleches besitzt. Die Laminierplatte 1 besitzt somit auf den beiden einander entgegengesetzt weisenden, jeweils mit 3 bezeichneten Plattenseiten einen rechteckigen Außenrand 4. Auf der in den Figuren 1 und 2 sichtbaren Plattenseite 3 ist die Oberfläche des Plattenkörpers 2 in einem rechteckig berandeten ersten Bereich 5 vollflächig, d. h. vollständig, mit einer Antihaftbeschichtung 6, in dem Beispiel mit einer DLC-Schicht, beschichtet. Deren Schichtdicke liegt in dem für Antihaftbeschichtungen auf Laminierplatten üblichen, einem Fachmann geläufigen Schichtdickenbereich. Die Schichtdicke ist so gering, dass die Antihaftbeschichtung 6 nur in der Vergrößerung von Fig. 3a körperlich, jedoch auch hier nicht maßstabsgerecht, dargestellt ist. Auf der gleichen, in den Figuren 1 und 2 gezeigten Plattenseite 3 ist die Oberfläche des Plattenkörpers 2 auch in einem zweiten Bereich 7 vollflächig mit Antihaftbeschichtung 6 bedeckt. In dem Beispiel ist der zweite Bereich 7 der Oberfläche des Plattenkörpers 2 als Randbereich 7 geometrisch aus vier jeweils streifenförmigen Randbereichsabschnitten 8 zusammengesetzt, so dass er den ersten Bereich 5 der Oberfläche des Plattenkörpers 2 als geschlossener Rahmen umgibt. In Bezug auf diesen Rahmen kann der erste Bereich 5 auch als ein Innenbereich der Oberfläche des Plattenkörpers 2 bezeichnet werden. Dabei grenzt der zweite Bereich 7 an den gesamten Außenrand 9 des ersten Bereichs 5 entlang dessen gesamten Umfanges an. Der zweite Bereich 7 erstreckt sich entlang seines gesamten Umfanges bis an den Außenrand 4 der Laminierplatte 1. Aus Figur 3 geht hervor, dass auch auf der gegenüberliegenden Plattenseite 3 eine entsprechende Aufteilung in einen ersten Bereich 5 und in einen diesen als geschlossener Rahmen umgebenden zweiten Bereich 7 gegeben ist, wobei die zweite Plattenseite auch ansonsten ebenfalls in der noch nachfolgend beschriebenen Weise bearbeitet bzw. ausgebildet ist. Dabei werden zur besseren Übersicht auf beiden Plattenseiten für einander entsprechende bzw. vergleichbare Merkmale die gleichen Bezugszeichen verwendet. Die Begriffe erster Bereich, zweiter Bereich, dritter Bereich usw. werden unter Betrachtung jeweils nur einer Plattenseite 3 verwendet, d. h. für beide Plattenseiten 3 voneinander unabhängig. Ebenfalls vereinfachend wird auf beiden Plattenseiten 3 für die Antihaftbeschichtung stets, d. h. sowohl betreffend den ersten Bereich 5 wie auch den zweiten Bereich 7, einheitlich das Bezugszeichen 6 verwendet, obwohl es sich dabei nicht notwendig um die gleiche Art von Antihaftbeschichtung handeln muss, aber kann. In dem gezeigten Beispiel sind in die Oberfläche des Plattenkörpers auf beiden Plattenseiten innerhalb des von dem Außenrand 9 umschlossenen Bereichs jeweils neun Gravuren 10 eingraviert. Das gewählte spiegelbildliche Buchstabensymbol steht symbolisch bzw. stellvertretend für jedes beim Laminierprozess zur Strukturübertragung auf den Folienstapel mögliche Zeichen oder Motiv. In dem Beispiel, d. h. nicht notwendig, sind die jeweils neun Gravuren 10 zueinander matrixartig verteilt angeordnet. Es versteht sich jedoch, dass auch eine davon abweichende Anzahl und Anordnung möglich wäre. Jeder der von je einer Gravur 10 eingenommene Bereich der Oberfläche ist vollständig von dem inneren Bereich 5 der Oberfläche des Plattenkörpers 2 umschlossen, unterscheidet sich von dem besagten inneren Bereich deutlich in seiner Topographie und wird somit nicht zu dem sog. ersten Bereich der Oberfläche des Plattenkörpers gerechnet. In dem Beispiel umfasst folglich der erste Bereich 5 der Oberfläche des Plattenkörpers 2 den von seinem Außenrand 9 berandeten Bereich der Oberfläche unter Ausschluss nur der von den Gravuren 10 eingenommenen Oberflächenbereiche, die an ihrem jeweiligen Außenrand 20 von dem ersten Bereich 5 der Oberfläche des Plattenkörpers 2 umschlossen sind. Auch die gravierten bzw. im Gravurbereich vertieften Partien der Oberfläche des Plattenkörpers 2 sind aber vollflächig mit der Antihaftbeschichtung 6 bedeckt.

Wie insbesondere Figur 3a verdeutlicht, wurde bei der Herstellung bzw. Bearbeitung der Laminierplatte 1 nur in dem rahmenartigen zweiten Bereich 7, dessen Breite mit B bezeichnet ist, die zunächst freiliegende Oberfläche des Plattenkörpers 2 vollflächig aufgeraut, während die Oberfläche des umrahmten ersten Bereiches 5 nicht aufgeraut wurde und eine im Vergleich zu dem Randbereich 7 geringere Rauigkeit besitzt. In dem Beispiel ist die gemittelte Rautiefe der Oberfläche des Plattenkörpers 2 in dem gesamten ersten Bereich 5 der Oberfläche kleiner als die gemittelte Rautiefe der Oberfläche des Plattenkörpers 2 in dem gesamten zweiten Bereich 7. In Figur 1a, die diesen Zwischenschritt bei der Herstellung der Laminierplatte 1 noch vor dem Auftrag der Antihaftbeschichtung 6 zeigt, und in der daher der Blick unmittelbar auf den ersten Bereich 5 und den zweiten Bereich 7 der Oberfläche des Plattenkörpers 2 fällt, ist dieser Unterschied symbolisch mittels einer eine Rauigkeit andeutenden Schraffur in dem zweiten Bereich 7 angedeutet. Erst in einem anschließenden Schritt wird auf jeder Plattenseite 3 die gesamte Oberfläche des Plattenkörpers 2, also ihr erster Bereich 5, ihr zweiter Bereich 7 und die Gravuren, vollflächig mit einer geschlossenen, sich umlaufend bis zu dem Außenrand 4 des Plattenkörpers 2 erstreckenden Antihaftbeschichtung 6 beschichtet. Diesen gebrauchsfertigen Zustand der Laminierplatte 1 zeigen die Figuren 1 und 2 bis 4. Darin ist mit 17 der Bereich der Oberfläche der Antihaftbeschichtung 6 bezeichnet, der den ersten Bereich 5 der Oberfläche des Plattenkörpers 2 abdeckt. Mit dem Bezugszeichen 18 ist hingegen der Bereich der Oberfläche der Antihaftbeschichtung 6 bezeichnet, der den zweiten Bereich 7 der Oberfläche des Plattenkörpers 2 bedeckt. In dem Beispiel wurde der erste Bereich 5 der Oberfläche des Plattenkörpers poliert, und der zugehörige Bereich 17 wie auch der die Gravuren 10 bedeckende Bereich der Antihaftbeschichtung besitzt aufgrund der Glätte der Oberfläche der Antihaftbeschichtung ein hochspiegelndes Erscheinungsbild. Aufgrund der vergleichsweise größeren Rautiefe des zweiten Bereichs 7 der Oberfläche des Plattenkörpers 2 weist der zugeordnete Bereich 18 der Oberfläche der Antihaftbeschichtung 6 feine Unregelmäßigkeiten und demzufolge kein hochspiegelndes Erscheinungsbild auf, wobei dieser Unterschied in Figur 1 ebenfalls symbolisch mittels einer am Rand umlaufenden Schraffur angedeutet ist. Indem die Antihaftbeschichtung 6 den Plattenkörper 2 bedeckt, handelt es sich bei dem Bereich 18 der Oberfläche der Antihaftbeschichtung um einen Bereich 18 der Oberfläche der Laminierplatte 1, der form- und lagemäßig, also in einer zu der Plattenoberfläche senkrechten Projektionsbetrachtung, mit dem zweiten Bereich 7 der Oberfläche des Plattenkörpers 2 übereinstimmt bzw. diesem entspricht. Der Bereich 17 der Oberfläche der Antihaftbeschichtung 6 entspricht hinsichtlich Lage und Form, d. h. in einer zu der Plattenoberfläche senkrechten Projektionsbetrachtung, dem ersten Bereich 5 der Oberfläche des Plattenkörpers 2. Figur 3a verdeutlicht, dass in dem Bereich 18 der Oberfläche der Laminierplatte 1 die Rauigkeit größer ist als in dem Bereich 17 der Oberfläche der Laminierplatte 1.

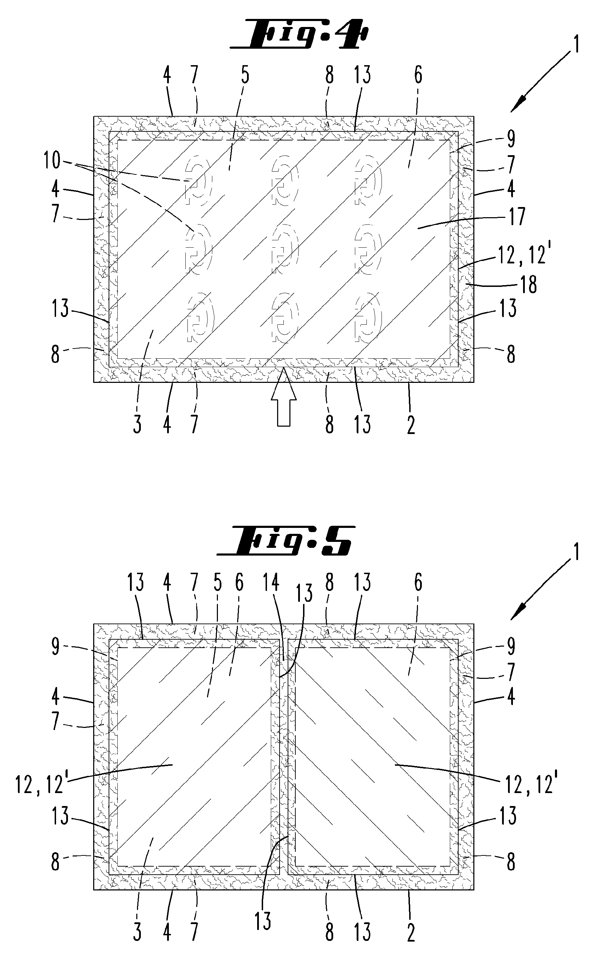

Figur 4 zeigt in einer Projektionsansicht von oben eine Situation, bei der auf die in den Figuren 1 bis 3 gezeigte Laminierplatte 1 für einen Laminierprozess eine Mehrzahl von Folien 12, deren Außenränder 13 zueinander fluchten, für einen nachfolgenden Laminiervorgang aufgelegt wurde. Das Format der Folien 12 ist in der Weise auf die Abmessungen der Laminierplatte 1 abgestimmt und die Ausrichtung ist in der Weise gewählt, dass sich der Außenrand 13 der Folien 12 bzw. des Folienstapels 12' entlang seines gesamten, rechteckig verlaufenden Grundrisses innerhalb des zweiten Bereiches 7 etwa mittig, d. h. bei etwa halber Breite, erstreckt. Mit dem Pfeil ist das Ansetzen eines Spatels zur Ablösung des Folienverbundes von der Laminierplatte 1 nach dem Laminiervorgang angedeutet.

Figur 5 zeigt eine Abwandlung von der in Figur 4 gezeigten Anordnung. Darin werden, wie auch in nachfolgenden Figuren, für Einzelheiten und Merkmale, die mit denen der Figuren 1 bis 4 korrespondieren, zur Vereinfachung identische Bezugszeichen verwendet. Die in Figur 5 gewählte Laminierplatte 1 besitzt auf jeder der beiden Plattenseiten 3 zwei voneinander seitlich beabstandete erste Bereiche 5 der Oberfläche der Laminierplatte 1, in denen die Oberfläche des Plattenkörpers 2 jeweils nicht aufgeraut, sondern poliert und danach vollflächig mit Antihaftbeschichtung 6 beschichtet wurde. Es versteht sich, dass auch andere Formate mit drei oder mehr ersten Bereichen 5 denkbar sind. Der Begriff des ersten Bereiches bezeichnet insofern einen jeweiligen Bereich der Oberfläche des Plattenkörpers, der sich einer ersten Ausführung bzw. Beschaffenheit der Oberfläche im Hinblick auf die Rauigkeit zuordnen lässt. Der zweite Bereich 7 erstreckt sich wieder streifenförmig entlang des gesamten Außenrandes 4 des Plattenkörpers 2 und umfasst zusätzlich einen beide längsseitigen Randabschnitte 8 miteinander verbindenden Mittelsteg 14, so dass der zweite Bereich 7 beide erste Bereiche 5 jeweils rahmenartig umschließt. Der zweite Bereich 7 der Oberfläche des Plattenkörpers 2 wurde vollflächig aufgeraut und vollflächig mit Antihaftbeschichtung 6 beschichtet. Auf die Laminierplatte 1 sind in der gezeigten Anordnung zwei Folienstapel 12', deren Folien 12 ein im Vergleich zu Figur 4 kleineres Format besitzen, so aufgelegt, dass sich der Außenrand 13 beider Folienstapel 12' jeweils entlang des gesamten Umfanges in dem zweiten Bereich 7 etwa mittig erstrecken.

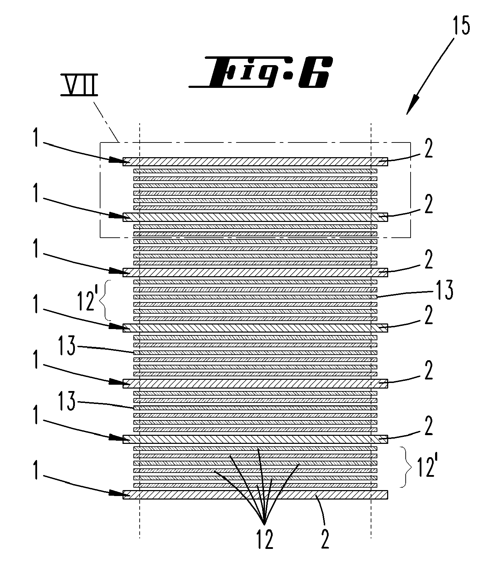

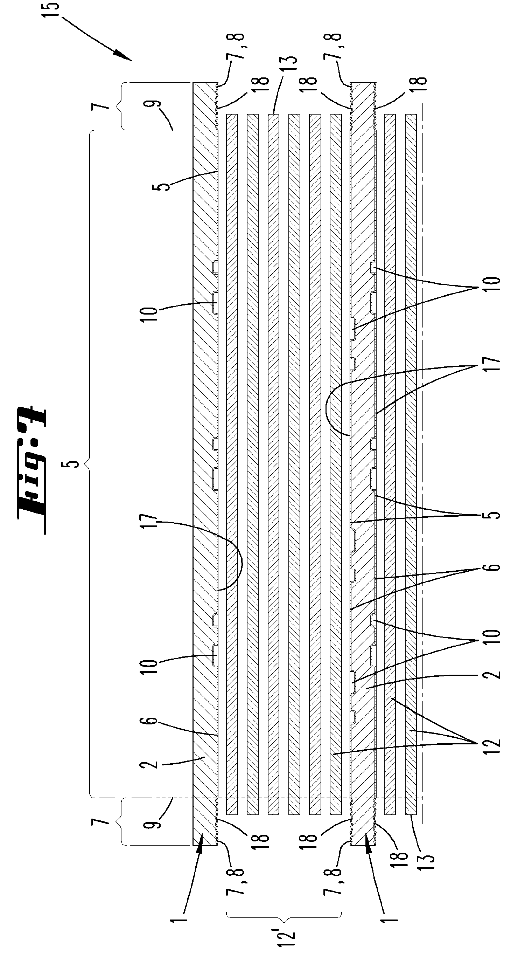

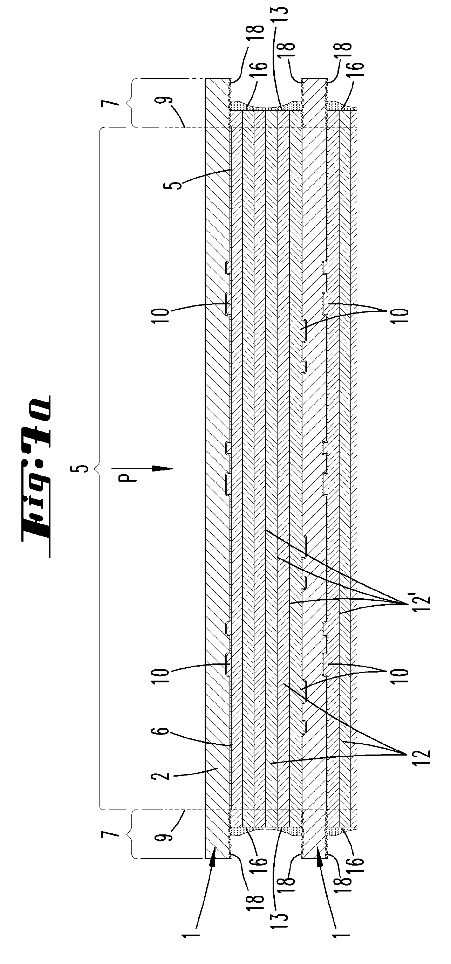

Figur 6 zeigt eine Anordnung 15 zum Laminieren, die in dem Beispiel, d. h. nicht notwendig, eine Anzahl von sieben Laminierplatten 1 umfasst. Bis auf die oberste und die unterste Laminierplatte 1 entsprechen die Laminierplatten 1 den in den Figuren 1 bis 4 gezeigten Laminierplatten 1. Bei diesen Laminierplatten 1 sind auf beiden Plattenseiten 3 ein erster Bereich 5, eine Mehrzahl von Gravuren 10 und ein zweiter Bereich 7 in einander entsprechender Anordnung ausgebildet. Abweichend hat bei der obersten und untersten Laminierplatte 1 die von dem Stapel wegweisende Oberfläche des Plattenkörpers 2 keine strukturgebende Funktion. Zwischen je zwei in der gestapelten Anordnung 15 benachbarten Laminierplatten 1 ist jeweils ein Folienstapel 12' in der mit Bezug auf Figur 4 beschriebenen Ausrichtung eingelegt, wobei jeder Folienstapel 12 in dem Beispiel aus sechs einzelnen, vollflächig dünn mit Klebstoff beschichteten Folien 12 besteht. Es wird angemerkt, dass auch nicht mit Klebstoff beschichtete Folien eingesetzt werden können, wobei dann ohnehin eine vergleichsweise geringe Neigung zu Antihaftschicht-Ablösungen zu erwarten wäre. Die gestapelte Anordnung 15, die auch als Stack bezeichnet wird, umfasst in dem Beispiel sechs Sub-Stacks, die jeweils aus zwei benachbarten Laminierplatten 1 sowie den dazwischen gestapelten Folien 12 bestehen. Die Figuren 6 und 7 zeigen den Stapel zur Veranschaulichung zunächst in einer auseinander gezogenen Explosionsansicht. Zum Vergleich zeigt Figur 7a den auch in Figur 7 gezeigten Teil der Anordnung 15 nach dem erfolgten Laminiervorgang, bei dem die Anordnung 15 mittels auf die äußeren Laminierplatten 1 einwirkendem Druck (vgl. den Pfeil P) und unter Einwirkung von Wärme zusammengepresst wurde. Schematisch ist dargestellt, dass zufolge der Druck- und Temperatureinwirkung Klebstoff 16 (dieser ist in den Figuren 6 und 7 aufgrund des sehr dünnen flächigen Auftrages nicht mit dargestellt) aus dem Außenrand 13 des Folienstapels 12' ausgetreten ist. Die dabei aus dem Klebstoff gebildeten Wülste 16 grenzen zufolge der beschriebenen Ausrichtung der Folienstapel 12' nur innerhalb des Randbereiches 7 an die Laminierplattenoberfläche an. Unter der Laminierplattenoberfläche wird die freiliegende Oberfläche der Laminierplatte 1 verstanden, die von der ganzflächig aufgebrachten Antihaftbeschichtung 6 gebildet wird. Zufolge des aufeinander abgestimmten Formats der Folien und der Laminierplatten sowie der gezeigten Ausrichtung der Folien erstrecken sich die Außenränder 13 der Folien 12 und somit auch die von dem Klebstoff 16 gebildeten Wülste innerhalb des Bereiches 18 der Antihaftbeschichtung 6, der den randseitigen zweiten Bereich 7 der Oberfläche des Plattenkörpers 2 abdeckt. Der Bereich 18 umschließt rahmenartig den Bereich 17 der Antihaftbeschichtung 6, der den ersten Bereich 5 der Oberfläche des Plattenkörpers 2 bedeckt. In dem Bereich 18 ist der Wasserkontaktwinkel größer als in dem Bereich 17, so dass in dem Bereich 18 auch die Antihaftwirkung der Oberfläche ausgeprägter als in dem Bereich 17 ist. Dies ermöglicht ein leichtes Abtrennen des ausgetretenen Klebstoffes 16 von Bereich 18. Zudem lässt sich der Bereich 18 leichter reinigen, z. B. durch Wischen mit einem lösungsmittelgetränkten Tuch. Nach dem Abtrennen des laminierten Folienstapels 12' von den Laminierplatten 1 können aus dem laminierten Stapel, dessen Folien nun fest miteinander verbunden sind, ein oder mehrere Dokumente (abhängig von der Aufteilung) herausgestanzt werden. In dem Beispiel mit neun Gravuren können bspw. neun Dokumente bzw. Karten ausgestanzt werden.

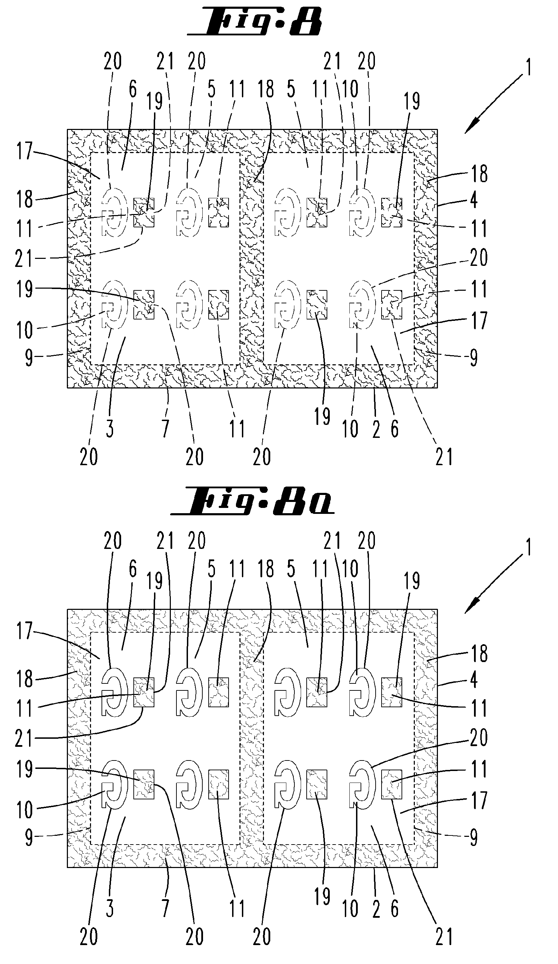

Mit Bezug auf Figur 8 wird ein weiteres bevorzugtes Ausführungsbeispiel einer erfindungsgemäßen Laminierplatte 1 vorgestellt, wobei Figur 8a die in Figur 8 gezeigte Laminierplatte 1 bei der Herstellung noch ohne die Antihaftbeschichtung 6 zeigt. Auf der in der Draufsicht dargestellten Plattenseite 3 gibt es zwei sog. erste Bereiche 5 der Oberfläche des Plattenkörpers 2, die an ihrem gesamten Außenrand 9, vergleichbar zu Figur 5, von einem insofern äußeren bzw. rahmenartigen sog. zweiten Bereich 7 der Oberfläche des Plattenkörpers 2 umschlossen sind. Die Bereiche 5 füllen nicht die gesamte, im Inneren des jeweiligen Außenrandes 9 befindliche Fläche aus, sondern der jeweilige erste Bereich 5 umschließt jeweils vier Gravuren 10 an deren jeweiligem Außenrand 20 und vier sog. dritte Bereiche 11 der Oberfläche des Plattenkörpers 2 entlang deren jeweiligem Außenrand 21. Auch die Bezeichnung als dritte Bereiche bezweckt nicht eine bloße Nummerierung von Bereichen, sondern dient zur Kennzeichnung von einem oder mehreren Bereichen mit einer zueinander bezüglich der Rauigkeit gleichartig beschaffenen Plattenoberfläche. In Bezug auf die beispielsweise in Figur 8 gezeigte Ausführungsform könnte man die sog. ersten Bereiche 5 auch als Innenbereiche, den zweiten Bereich 7 auch als Randbereich und die dritten Bereiche 11 auch als innerste Bereiche oder Kernbereiche bezeichnen. Die beiden inneren Bereiche 5 wurden in zueinander gleicher Weise oberflächenbehandelt, so dass die Oberfläche in diesen Bereichen 5 eine zueinander gleiche oder zumindest vergleichbare gemittelte Rautiefe besitzen. Der zweite Bereich 7 der Oberfläche, der von dem Außenrand 4 der Laminierplatte 2 und von den Außenrändern 9 der ersten Bereiche begrenzt wird, wurde überall einheitlich, jedoch in von den Bereichen 5 abweichender Weise oberflächenbehandelt, so dass er überall die gleiche oder eine vergleichbare gemittelte Rautiefe besitzt, die größer als die gemittelte Rautiefe in den ersten Bereichen 5 ist. Alle Bereiche 11 der Oberfläche des Plattenkörpers 2 wurden in zueinander einheitlicher Art und Weise oberflächenbehandelt, so dass sie jeweils eine zueinander gleiche oder vergleichbare gemittelte Rautiefe besitzen, die in dem Beispiel größer ist als die gemittelte Rautiefe in den Bereichen 5 und die kleiner als oder gleich groß wie die gemittelte Rautiefe in dem rahmenartigen sog. dritten Bereich 7 ist. In dem gezeigten Beispiel sind die beiden ersten Bereiche 5, der zweite Bereich 7, alle dritten Bereiche 11 und alle Gravuren 10 mit einer unterbrechungslosen Antihaftbeschichtung 6 beschichtet. In dem Beispiel, d. h. nicht notwendig, beträgt der Wasserkontaktwinkel (WCA) auf den Bereichen 17 der Oberfläche der Antihaftbeschichtung 6, welche die in dem Beispiel polierten, sog. ersten Bereiche 5 der Oberfläche des Plattenkörpers 2 bedecken, 101° (also etwa 100°). Dies verhindert das Anhaften von Verunreinigungen, wie z. B. Farbresten von vorher bedruckten Folien usw., und ermöglicht eine leichte Reinigung. In dem Bereich 18 der Oberfläche der Antihaftbeschichtung 6, der den sog. zweiten Bereich 7 der Oberfläche des Plattenkörpers 2 bedeckt, beträgt der Wasserkontaktwinkel 118° (also etwa 120°). Dies verhindert ein Anhaften von Kleberresten oder dergleichen. Der Unterschied liegt daran, dass der rahmenartige Bereich 7 der Oberfläche des Plattenkörpers 2 vor dem Aufbringen der Antihaftbeschichtung 6 einer Strahlbehandlung mit dem Strahlmittel Korund unterzogen wurde, wobei die Korund-Partikel aus dem Größenbereich 355 µm bis 500 µm gewählt wurden. In den Bereichen 19 der Oberfläche der Antihaftbeschichtung 6 beträgt der Wasserkontaktwinkel ebenfalls 118°, was daran liegt, dass auch die dritten Bereiche 11 der Oberfläche des Plattenkörpers vor dem Auftrag der Antihaftbeschichtung der gleichen Strahlbehandlung ausgesetzt wurde. Die Antihaftbeschichtung 6 besitzt hingegen in allen vorgenannten Bereichen eine einheitliche Rezeptur. Abweichend von dem Ausführungsbeispiel bestünde auch die Möglichkeit, dass nicht unmittelbar an der Oberfläche des Plattenkörpers 2 die besagten sog. dritten Bereiche 11 erzeugt werden, sondern dass stattdessen bspw. die in Figur 8 von den Außenrändern 21 umrandeten Abschnitte des Plattenkörpers 2 aus diesem ausgestanzt oder darin eingetieft und dann bspw. jeweils ein konturmäßig passender Chip, RFID, oder dergleichen in die Laminierplatte 1 eingesetzt (bspw. eingeklebt) wird. Dessen freiliegende, an den ersten Bereich angrenzende Oberfläche kann vorzugsweise vorher (jedoch auch alternativ anschließend) in gewünschter Weise oberflächenbehandelt (bspw. zur Aufrauung gestrahlt) werden, um dann, insbesondere nach einem noch anschließenden Auftrag von Antihaftbeschichtung, eine definierte Antihaftwirkung bzw. einen gewünschten Wasserkontaktwinkel zu besitzen. Bevorzugt ist dort wiederum ein Wasserkontaktwinkel von ca. 120°, der Anhaftungen von Kleber etc. wirksam vermeidet.

## Patentansprüche

1. Laminierplatte (1), insbesondere für Laminierprozesse, insbesondere zur Herstellung von Dokumenten wie bspw. Führerscheinen, Personalausweisen, Kreditkarten oder dergleichen mittels Folien (12), wobei die Laminierplatte (1) einen Plattenkörper (2) umfasst, wobei die Oberfläche des Plattenkörpers (2) auf zumindest einer der beiden Plattenseiten (3) des Plattenkörpers (2) zumindest einen ersten Bereich (5) und zumindest einen zweiten Bereich (7) umfasst, wobei der erste Bereich (5) an seinem Außenrand (9), insbesondere an seinem gesamten Außenrand (9) oder an seinem Außenrand zumindest abschnittsweise, an den zweiten Bereich (7) angrenzt, wobei die gemittelte Rautiefe der Oberfläche des Plattenkörpers (2) in dem ersten Bereich (5) kleiner als die gemittelte Rautiefe der Oberfläche des Plattenkörpers (2) in dem zweiten Bereich (7) ist, und wobei die Oberfläche des Plattenkörpers (2) in dem ersten Bereich (5) vollflächig mit Antihaftbeschichtung (6) bedeckt ist, **dadurch gekennzeichnet, dass** die Oberfläche des Plattenkörpers (2) in dem zweiten (7) Bereich vollflächig mit Antihaftbeschichtung (6) bedeckt ist.

2. Laminierplatte (1) nach Anspruch 1, **dadurch gekennzeichnet, dass** der Wasserkontaktwinkel auf der Antihaftbeschichtung (6), die den zweiten Bereich (7) der Oberfläche des Plattenkörpers (2) bedeckt, größer ist als der Wasserkontaktwinkel auf der Antihaftbeschichtung (6), die den ersten Bereich (5) der Oberfläche des Plattenkörpers (2) bedeckt.

3. Laminierplatte (1) nach einem oder mehreren der vorangehenden Ansprüche, **dadurch gekennzeichnet, dass** der erste Bereich (5) der Oberfläche des Plattenkörpers (2) den gesamten von seinem Außenrand (9) berandeten, insbesondere umschlossenen, Bereich oder den von seinem Außenrand (9) berandeten, insbesondere umschlossenen, Bereich unter Ausschluss von einem oder mehreren Oberflächenbereichen, die an ihrem jeweiligen Außenrand (20) von dem ersten Bereich der Oberfläche (5) des Plattenkörpers (2) umschlossen sind, umfasst.

4. Laminierplatte (1) nach einem oder mehreren der vorangehenden Ansprüche, **dadurch gekennzeichnet, dass** die Antihaftbeschichtung (6) Kohlenstoff, insbesondere mit Elementzusätzen wie beispielsweise Silizium und/ oder Sauerstoff, aufweist, wobei insbesondere vorgesehen ist, dass es sich um eine Antihaftbeschichtung (6) auf Kohlenstoffbasis, wie beispielsweise um eine DLC-Schicht, handelt.

5. Laminierplatte (1) nach einem oder mehreren der vorangehenden Ansprüche, **dadurch gekennzeichnet, dass** die Antihaftbeschichtung (6) Teflon und/oder Nano-Partikel aufweist oder dass es sich bei der Antihaftbeschichtung (6) um eine CrN-Schicht handelt.

6. Laminierplatte (1) nach einem oder mehreren der vorangehenden Ansprüche, **dadurch gekennzeichnet, dass** in den von dem Außenrand (9) des ersten Bereichs (5) umschlossenen Bereich der Plattenoberfläche eine Gravur (10) in die Oberfläche des Plattenkörpers (2) eingebracht ist oder mehrere Gravuren (10) in die Oberfläche des Plattenkörpers (2) eingebracht sind, wobei jede Gravur (10) von dem ersten Bereich (5) der Oberfläche umschlossen ist.

7. Laminierplatte (1) nach einem oder mehreren der vorangehenden Ansprüche, **dadurch gekennzeichnet, dass** jede Gravur (10) vollflächig mit Antihaftbeschichtung (6) bedeckt ist.

8. Laminierplatte (1) nach einem oder mehreren der vorangehenden Ansprüche, **dadurch gekennzeichnet, dass** die Oberfläche des Plattenkörpers (2) in dem gesamten ersten Bereich (5) poliert ist und anschließend mit Antihaftbeschichtung (6) bedeckt wurde.

9. Laminierplatte (1) nach einem oder mehreren der vorangehenden Ansprüche, **dadurch gekennzeichnet, dass** die Oberfläche des Plattenkörpers (2) in dem gesamten zweiten Bereich (7) mittels Strahlbehandlung, insbesondere unter Verwendung von Sand, Korund, Glas oder dergleichen als Strahlmittel, aufgeraut und danach mit Antihaftbeschichtung (6) bedeckt wurde, wobei insbesondere vorgesehen ist, dass nach einer Strahlbehandlung unter Verwendung eines vergleichsweise gröberen Strahlmittels eine Strahlbehandlung unter Verwendung eines im Vergleich dazu feineren Strahlmittels erfolgt ist.

10. Laminierplatte (1) nach einem oder mehreren der vorangehenden Ansprüche, **dadurch gekennzeichnet, dass** es auf der zumindest einen Plattenseite (3) einen dritten Bereich (11) oder mehrere dritte Bereiche (11) der Oberfläche des Plattenkörpers (2) gibt, wobei ein jeweiliger dritter Bereich (11) an seinem Außenrand (21) von dem ersten Bereich (5) der Oberfläche des Plattenkörpers (2) umschlossen ist, und dass sich die gemittelte Rautiefe der Oberfläche des Plattenkörpers (2) in einem jeweiligen dritten Bereich (11) von der gemittelten Rautiefe der Oberfläche des Plattenkörpers (2) in dem angrenzenden ersten Bereich (5) unterscheidet.

11. Laminierplatte (1) nach einem oder mehreren der vorangehenden Ansprüche, **dadurch gekennzeichnet, dass** die gemittelte Rautiefe in dem zweiten Bereich (7) der Oberfläche des Plattenkörpers (2) größer als oder gleich groß wie die gemittelte Rautiefe in einem dritten Bereich (11) oder wie in mehreren dritten Bereichen (11) der Oberfläche des Plattenkörpers (2) ist.

12. Laminierplatte (1) nach einem oder mehreren der vorangehenden Ansprüche, **dadurch gekennzeichnet, dass** in einem dritten Bereich (11) oder in mehreren dritten Bereichen (11) der Oberfläche des Plattenkörpers (2) die gemittelte Rautiefe größer ist als die gemittelte Rautiefe in dem an den jeweiligen dritten Bereich (11) angrenzenden ersten Bereich (5) der Plattenoberfläche.

13. Laminierplatte (1) nach einem oder mehreren der vorangehenden Ansprüche, **dadurch gekennzeichnet, dass** die Oberfläche des Plattenkörpers (2) in dem dritten Bereich (11) oder in mehreren oder allen dritten Bereichen (11) jeweils nicht mit Antihaftbeschichtung (6) bedeckt ist oder jeweils vollflächig mit Antihaftbeschichtung (6) bedeckt ist.

14. Laminierplatte (1) nach einem oder mehreren der vorangehenden Ansprüche, **dadurch gekennzeichnet, dass** der Plattenkörper (2) einen, insbesondere metallischen, Grundkörper umfasst sowie insbesondere zumindest eine auf den Grundkörper zumindest auf der einen Plattenseite (3) aufgebrachte Grundierung.

15. Laminierplatte (1) nach einem oder mehreren der vorangehenden Ansprüche, **dadurch gekennzeichnet, dass** der Grundkörper aus Stahl besteht und vernickelt ist oder dass der Grundkörper aus Edelstahl besteht oder dass der Grundkörper aus Messing besteht und insbesondere vernickelt und/oder verchromt ist.

16. Laminierplatte (1) nach einem oder mehreren der vorangehenden Ansprüche, **dadurch gekennzeichnet, dass** auch auf der zweiten Plattenseite (3) des Plattenkörpers (2) die Oberfläche des Plattenkörpers (2) zumindest einen ersten Bereich (5) umfasst, der an seinem Außenrand (9), insbesondere überall oder zumindest abschnittsweise, an einen zweiten Bereich (7) der Oberfläche des Plattenkörpers (2) angrenzt, wobei der erste Bereich (5) den gesamten von seinem Außenrand (9) berandeten, insbesondere umschlossenen, Bereich oder den von seinem Außenrand (9) berandeten, insbesondere umschlossenen, Bereich unter Ausschluss von einem oder mehreren Oberflächenbereichen, die an ihrem jeweiligen Außenrand (9) von dem ersten Bereich (5) umschlossen sind, umfasst, wobei die gemittelte Rautiefe der Oberfläche des Plattenkörpers (2) in dem ersten Bereich (5) kleiner ist als die gemittelte Rauftiefe der Oberfläche des Plattenkörpers (2) in dem zweiten Bereich (7), und wobei die Oberfläche des Plattenkörpers (2) in dem ersten Bereich (5) vollflächig mit Antihaftbeschichtung (6) bedeckt ist, und wobei die Oberfläche des Plattenkörpers (2) in dem zweiten Bereich (7) vollflächig mit Antihaftbeschichtung (6) bedeckt ist.

17. Laminierplatte (1) nach einem oder mehreren der vorangehenden Ansprüche, **dadurch gekennzeichnet, dass** in den Plattenkörper (2) ein Einsatzelement, bspw. ein Chip, RFID oder dergleichen, oder mehrere Einsatzelemente eingesetzt, insbesondere eingeklebt, ist oder sind, so dass eine Oberfläche eines jeweiligen Einsatzelements an ihrem jeweiligen Außenrand von einem ersten Bereich (5) der Oberfläche des Plattenkörpers (2) umschlossen ist, wobei die gemittelte Rautiefe dieser jeweiligen Oberfläche des Einsatzelements größer als die gemittelte Rautiefe des angrenzenden ersten Bereichs (5) der Oberfläche des Plattenkörpers (2) ist.

18. Anordnung zum Laminieren, umfassend zwei oder mehr miteinander gestapelte Laminierplatten (1), wobei zwischen je zwei Laminierplatten (1) jeweils ein Folienstapel (12') angeordnet ist, der eine Mehrzahl von, insbesondere mit Klebstoff beschichteten, Folien (12) umfasst, **dadurch gekennzeichnet, dass** es sich bei den Laminierplatten (1) um Laminierplatten (1) gemäß einem oder mehreren der vorangehenden Ansprüche handelt und dass in einer zu der Laminierplattenoberfläche senkrechten projektionsmäßigen Betrachtung der Außenrand (13) des Folienstapels (12') an den Laminierplatten (1) in projektionsmäßiger Überdeckung des jeweiligen zweiten Bereichs (7) der Oberfläche des Plattenkörpers (2) verläuft.

19. Laminierplatte (1) nach einem oder mehreren der vorangehenden Ansprüche, **dadurch gekennzeichnet, dass** an der Oberfläche der Laminierplatte (1) die Rauigkeit, insbesondere die gemittelte Rautiefe und/oder der arithmetische Mittenrauwert, in einem dem zweiten Bereich (7) entsprechenden Bereich größer als in einem dem ersten Bereich (5) entsprechenden Bereich ist.

20. Laminierplatte (1) nach einem oder mehreren der vorangehenden Ansprüche, **dadurch gekennzeichnet, dass** an der Oberfläche der Laminierplatte (1) die gemittelte Rautiefe und/oder der arithmetische Mittenrauwert in einem dem zweiten Bereich (7) entsprechenden Bereich etwa 1 Mikrometer beträgt oder größer als 1 Mikrometer ist und/ oder kleiner als 10 Mikrometer ist, insbesondere im Wertebereich von 2 bis 5 Mikrometern liegt, insbesondere im Wertebereich von 2,5 bis 3,5 Mikrometern liegt, und insbesondere 3 oder etwa 3 Mikrometer beträgt.
